# EUROPÄISCHE PATENTSCHRIFT

(11) **EP 1 056 811 B1**
(45) Veröffentlichungstag und Bekanntmachung des Hinweises auf die Patenterteilung: **27.10.2004**
(21) Anmeldenummer: 99915524.5
(22) Anmeldetag: 12.02.1999
(51) Int. Cl.: C09D 5/03, C09D 201/02

(54) **VERFAHREN ZUR HERSTELLUNG VON PULVERÜBERZÜGEN**
METHOD FOR PRODUCING POWDER COATINGS
PROCEDE DE REALISATION DE COUCHES DE POUDRE

(30) Priorität: 17.02.1998 DE 19806445
(43) Veröffentlichungstag der Anmeldung: 06.12.2000
(73) Patentinhaber: E.I. Dupont de Nemours and Company, Inc., Wilmington, DE 19898 (US)
(72) Erfinder: BLATTER, Karsten, D-50374 Erftstadt (DE); NIGGEMANN, Frank, D-84036 Landshut (DE); ZIMMERMANN, Frank, D-84160 Frontenhausen (DE)
(74) Vertreter: Gille Hrabal Struck Neidlein Prop Roos
(86) Internationale Anmeldenummer: PCT/EP1999/001009
(87) Internationale Veröffentlichungsnummer: WO 1999/041323

(56) Entgegenhaltungen:
- EP-A- 0 445 556
- WO-A-92/01517
- GB-A- 2 056 885
- PATENT ABSTRACTS OF JAPAN vol. 017, no. 426 (C-1094), 9. August 1993 (1993-08-09) & JP 05 092172 A (TAWADA:KK), 16. April 1993 (1993-04-16)
- PATENT ABSTRACTS OF JAPAN vol. 096, no. 011, 29. November 1996 (1996-11-29) & JP 08 188632 A (SHOWA DENKO KK), 23. Juli 1996 (1996-07-23)

## Beschreibung

Die Erfindung betrifft die Herstellung von Pulverüberzügen für metallische und nichtmetallische Substrate wie Holz- und Kunststoffsubstrate, Glas und Keramik.

Die dekorative und funktionale Beschichtung von Oberflächen mit Pulverlacken hat aufgrund der hohen Wirtschaftlichkeit des Verfahrens sowie der günstigen Beurteilung aus der Sicht des Umweltschutzes bei der Beschichtung von Metallen ein breites Anwendungsgebiet gefunden. Zahlreiche Pulverlackformulierungen für die verschiedenen Einsatzgebiete wurden entwickelt. Die bisher zur Verfügung stehenden Verfahren zur Aushärtung von Pulverlacken erfordern, daß das auf dem Substrat abgeschiedene Pulver zunächst durch Erwärmen auf Temperaturen oberhalb der Glasübergangstemperatur bzw. des Schmelzpunktes der Pulverlackformulierung aufgeschmolzen wird. Als Wärmequellen dienen z.B. Konvektionsöfen, Infrarot-Strahler oder Kombinationen aus beiden. Die Aushärtung der Pulverbeschichtung erfolgt für thermisch vernetztende Systeme typischerweise durch Erwärmung auf Temperaturen zwischen 140 und 200°C für einen Zeitraum von ca. 10 bis 30 Minuten.

Für UV-härtende Pulverlackformulierungen erfolgt die Aushärtung der aufgeschmolzenen Pulverschicht mit Hilfe von ultravioletter Strahlung innerhalb von wenigen Sekunden. Die Vernetzung der Pulverlacke erfolgt in der Regel über die Polymerisation von Doppelbindungen oder zyklischen Ethern nach radikalischem oder kationischem Reaktionsmechanismus.

Beide Verfahren haben Nachteile. Für thermisch härtende Pulverlacke sind hohe Temperaturen erforderlich, die einerseits eine Beschichtung von temperaturempfindlichen Oberflächen wie Holz oder Kunststoff nicht zulassen und andererseits bei Metallteilen einen erheblichen Energieeinsatz erfordern. Der Einsatz von UV-härtenden Pulverlacken erfordert zwei Prozeßschritte, da zunächst das Pulver durch Erwärmung aufgeschmolzen werden muß und anschließend in einem zeiten Schritt die Aushärtung mit UV-Strahlung erfolgt. Außerdem ist die Aushärtung von pigmentierten Pulverlacken in größeren Schichtdicken schwierig, da die UV-Strahlung von den farbgebenden Komponenten absorbiert wird und damit eine Durchhärtung der Beschichtung erschwert ist.

Über die geschilderten üblichen Härtungsverfahren hinaus ist eine Methode bekannt, nach welcher Pulverlacke mit Hilfe von Strahlung aus dem nahen Infrarotbereich (NIR-Strahlung) ausgehärtet werden können durch Ausnutzung von hoher Strahlungsintensität (entsprechend Bär, Sedelmeyer, "Fokussierte NIR-Technologie" Jahresfachtagung "Die EPS-Praxis 1997", Bad Neuheim 27.-28.11.97). Durch diese Methode ist es möglich, das Aufschmelzen und die Aushärtung von Pulverlacken in einem Prozeßschritt vorzunehmen, wobei hohe Härtungstemperaturen erreicht werden können. ohne daß es zu einer wesentlichen Erwärmung des beschichteten Substrates kommt. Bezüglich Eigenschaften wie Beschichtungsqualität und Härte sind die erzielten Beschichtungen jedoch nicht immer zufriedenstellend und reproduzierbar zu gewährleisten.

Gemäß GB-A 2,056,885 wird ein Verfahren zur Beschichtung von Cellulose-Material wie Holz und Papier beschrieben, bei dem eine Pulverbeschichtung aufgetragen und strahlengehärtet wird. Die IR-Bestrahlung erfolgt in einem Bereich von 1 bis 5 µm (Mikrometer) in einem Zeitraum von 20 bis 120 Sekunden und erfordert somit einen realtiv höheren Energieaufwand zur Erzielung der gewünschten Eigenschaften.

Aufgabe der Erfindung ist es daher, ein Verfahren zu entwickeln, bei dem Pulverlacküberzüge erzielt werden durch Aufschmelzen und Aushärten von Pulverlack-Zusammensetzungen in einem Prozeßschritt bei kurzen Aushärtungszeiten, wobei sich die Überzüge durch eine gleichmäßige Beschichtung und verbesserte mechanische Eigenschaften sowie eine verbesserte Lösemittelbeständigkeit auszeichnen.

Die Aufgabe wird durch ein Verfahren gelöst, bei welchem Pulverlack-Zusammensetzungen verwendet werden, die Harze enthalten, welche über funktionelle Gruppen, die zur Ausbildung von Wasserstoffbrückenbindungen befähigt sind, vernetzt werden können, wobei diese funktionellen Gruppen in einer Konzentration von mehr als 100 mmol/kg Pulverlack-Zusammensetzung enthalten sind, die Pulverlack-Zusammensetzungen auf das Substrat aufgebracht werden und durch NIR-Bestrahlung aufgeschmolzen und ausgehärtet werden.

Beispielsweise können Pulverlack-Zusammensetzungen verwendet werden auf der Basis von Polyesterharzen, Epoxidharzen, (Meth)acrylharzen und ggf. Vernetzerharzen. Als zu Wasserstoffbrückenbindungen befähigte funktionelle Gruppen können die Harze beispielsweise OH, COOH, RNH, NH₂ und/oder SH enthalten. Als Vernetzerharze sind beispielsweise di- und/oder polyfunktionelle Carbonsäuren, Dicyandiamid, Phenolharze und/oder Aminoplaste geeignet. Die funktionellen Gruppen können dabei an dem zu vernetzenden Bindemittel und/oder and dem Vernetzerharz (Härter) gebunden sein.

Die Menge der erfindungsgemäß funktionalisierten Bindemittel und Härter wird so gewählt, daß die funktionellen Gruppen in einer Konzentration von mehr als 100 mmol/kg in der Pulverlackzusammensetzung enthalten sind. Beispielsweise können die Zusammensetzungen 15 bis 95 Gew.-% der erfindungsgemäß funktionalisierten Harze, wie z.B. Polyester, Epoxidharze und/oder (Meth)acrylatharze und/oder 0, 1 bis 50 Gew.-% der erfindungsgemäß funktionalisierten Härter enthalten. Dabei können als Bindemittel beispielsweise enthalten sein 20 bis 95 Gew.-% eines carboxylgruppenhaltigen Polyesters und/oder 15 bis 95 Gew.-% eines hydroxyfunktionalisierten Polyesters. Erfindungsgemäße Härter, die beispielsweise für die Aushärtung von Epoxid-Bindemitteln in Mengen von 1 bis 30 Gew.-% eingesetzt werde, können beispielsweise sein di- und/oder polyfunktionelle Carbonsäuren, Dicyandiamid, Phenolharze und/oder Aminoplaste. Dabei beziehen sich die vorstehenden Angaben "mmol/kg" und "Gew.-%" jeweils auf die fertige Pulverlackzusammensetzung (die gegebenenfalls Pigmente und/oder Füllstoffe und weitere Additive enthält).

Zur zusätzlichen Beschleunigung der Vernetzungsreaktion können die aus der thermischen Vernetzung bekannten Katalysatoren in der erfindungsgemäßen Pulverlack-Zusammensetzung enthalten sein. Derartige Katalysatoren sind beispielsweise Zinnsalze, Phosphide, Amine und Amide. Sie sind bespielsweise in Mengen von 0,02 bis 3 Gew.-% einsetzbar.

Bevorzugt kommen derartige Vernetzungskatalysatoren zum Einsatz.

Entsprechend dem erfindungsgemäßen Verfahren werden die Pulverlack-Zusammensetzungen, welche als weitere Komponenten in der Pulverlacktechnologie übliche Bestandteile, wie Pigmente und/oder Füllstoffe sowie weitere Lackadditive enthalten können, auf das zu beschichtende Substrat nach üblichen Methoden aufgetragen und anschließend durch NIR-Strahlung aufgeschmolzen und ausgehärtet. Das Aufschmelzen und Aushärten beträgt im allgemeinen weniger als 7 Minuten, beispielsweise 1 Sekunde bis 300 Sekunden, abhängig von der jeweiligen Zusammensetzung des Pulverlackes.

Die erfindungsgemäß verwendbaren Polyester können üblicherweise durch Reaktion von Polycarbonsäuren, deren Anhydriden und/oder Estern mit Polyalkoholen hergestellt werden, wie sie beispielsweise beschrieben sind bei D.A. Bates, "The Science of Powder Coatings", Vol. 1 u. 2, Gardiner House, London, 1990. Bevorzugt werden hydroxyund/oder carboxyfunktionalisierte Polyesterharze verwendet. Die Hydroxy- und Carboxyfunktionen können durch geeignete Auswahl der Ausgangsstoffe und/oder deren Mengenanteile eingeführt werden.

Es sind auch Mischungen aus carboxyl- und hydroxylgruppenhaltigen Polyestern einsetzbar. Die erfindungsgemäßen carboxylfunktionalisierten Polyester haben üblicherweise eine Säurezahl von 10 bis 200 mg KOH/g Harz und die hydroxylfunktionalisierten Polyester eine OH-Zahl von 10 bis 200 mg KOH/g Harz.

Als Härter für die Polyesterharze sind übliche Härte, wie beispielsweise cycloaliphatische, aliphatische oder aromatische Polyisocyanate, epoxidgruppenhaltige Vernetzer, wie beispielsweise Triglycidylisocyanorat (TGIC), Polyglycidylether auf Basis Diethylenglykol, glycicylfunktionalisierte (Meth)acrylcopolymere sowie amino-, amidooder hydroxylgruppenhaltige Vernetzer einsetzbar. Beispielsweise lassen sich carboxyfunktionalisierte Polyester mit Hilfe von mehrfunktionallen Epoxiden oder mehrfunktionallen Hydroxyalkylamiden vernetzen. Hydroxylfunktionalisierte Polyester vernetzen beispielsweise mit mehrfunktionellen Isocyanaten, die beispielsweise durch Bildung von Urethdiongruppen reversibel blockiert sein können.

Desweiteren können auch (Meth)acrylatharze mit den erfindungsgemäßen funktionellen Gruppen zum Einsatz kommen. Diese können beispielsweise aus Alkyl(meth)acrylaten mit Hydroxyalkyl(meth)acrylaten und olefinischen Monomeren wie Styrol und/oder Styrolderivaten hergestellt werden. Es kann sich auch um modifizierte Vinylcopolymere, beispielsweise auf der Basis glydicylgruppenhaltiger Monomerer und eines oder mehrerer ethylenisch ungesättigter Monomerer, z.B. Alkyl(meth)acrylat, Styrol, Styrolderivate, (Meth)acrylamid handeln oder um gepfropfte Vinylcopolymere, die beispielweise mit ethylenisch ungesättigten Säuren, Säurederivaten oder deren Anhydriden gepfropft sind.

Bevorzugt werden hydroxyfunktionelle (Meth)acrylatharze verwendet.

Als übliche Härter für (Meth)acrylatharze werden beispielsweise feste Dicarbonsäuren, beispielsweise mit 10 bis 12 Kohlenstoffatomen sowie carboxyfunktionelle Polymere eingesetzt.

Der verwendete Ausdruck "(Meth)acryl" steht für "Acryl" und/oder "Methacryl".

Die Einführung der erfindungsgemäßen funktionellen Gruppen kann auch über die zur Vernetzung der Pulverlacke eingesetzten Härterkomponenten eingeführt werden. Dies können sein hydroxy-, carboxy-, amid- oder amingruppenhaltige Härter, insbesondere vom Verbindungstyp R₂NH, RNH₂ und CONHR, beispielsweise Aminoplastharze wie Dicyandiamid und seine Derivate, sowie Phenolharze, z.B. auf Basis von Phenol/Formaldehyd, mit einem OH-Äquivalentgewicht von 100 bis 200 g/mol, die als Härter für Epoxidharze eingesetzt werden. Darüber hinaus sind auch di- und/oder polyfunktioneile Carbonsäuren und deren Derivate beispielsweise mit einem Carboxy-Äquivalentgewicht von 45 bis 500 g/mol verwendbar, die beispielsweise als Härter für epoxyfunktionelle Acrylatharze eingesetzt werden.

Beispiele für erfindungsgemäße Härter für Epoxidharze sind carboxylgruppenhaltige amidund/oder amingruppenhaltige Härter, beispielsweise Dicyanamid und seine Derivate, Carbonsäuren sowie Phenolharze.

Die erfindungsgemäß einsetzbaren Härter können z.B. in einer Menge von 0,1 bis 50 Gew.-%, bevorzugt von 0,1 bis 30 Gew.-%, in der Pulverlackzusammensetzung enthalten sein. Beispielweise können enthalten sein 0,5 bis 5 Gew.-% Dicyandiamid, 1 bis 20 Gew.-% Phenolharz und/oder 1 bis 20 Gew.-% di- und/oder polyfunktionelle Carbonsäuren.

Generell ist auch die Einführung von erfindungsgemäßen Thiolgruppen in die Pulverlack-Zsammensetzungen möglich.

Es sind auch Epoxy-Polyester-Hybridsysteme mit den erfindungsgemäßen funktionellen Gruppen verwendbar, beispielsweise Systeme mit einem Epoxy-Polyester-Verhältnis von 50:50 oder 30:70. In derartigen Systemen sind die erfindungsgemäßen funktionellen Gruppen im allgemeinen in der Polyesterkomponenten enthalten. Beispielsweise enthält eine derartige Polyesterkomponente Carboxylfunktionen.

Werden die erfindungsgemäßen funktionellen Gruppen über die zur Vernetzung der Pulverlacke eingesetzten Härterkomponenten in die Zusammensetzung eingeführt, so können die zu vernetzenden Bindemitel frei von den erfindungsgemäß funktionellen Gruppen sein, beispielsweise ungesättigte Polyesterharze, Epoxidharze und/oder (Meth)acrylatharze, z.B. epoxyfunktionalisierte Acrylatharze. Die zu vernetzenden Bindemittel können jedoch auch zusätzlich die erfindungsgemäßen funktionellen Gruppen tragen, beispielsweise Hydroxyl- und/oder Carboxylfunktionen.

Die erfindungsgemäßen Pulverlack-Zusammensetzungen können als weitere Komponenten die in der Pulverlacktechnologie üblichen Bestandteile wie Entgasungshilfsmittel, Verlaufsmittel, Mattierungsmittel, Texturierungsmittel, Lichtschutzmittel usw. enthalten. Vorzugsweise sind die bereis beschriebenen Vernetzungskatalysatoren in dem angegebenen Mengenbereich in der Pulverlack-Zusammensetzung enthalten. Das Verfahren eignet sich sowohl zur Aushärtung von Pulverklarlacken als auch für gefärbte Pulverlacke, die mit Hilfe von Pigmenten und Füllstoffen eingefärbt werden. Geeignete Pigmente und Füllstoffe sind dem Fachmann bekannt. Die Mengen liegen im üblichen, dem Fachmann geläufigen Bereich. Beispielsweise können die Zusammensetzungen 0 bis 50 Gew.-% Pigmente und/oder Füllstoffe enthalten. Die Menge der Additive liegt beispielsweise bei 0,01 bis 10 Gew.-%. Eine erfindungsgemäße Zusammensetzung kann beispielsweise enthalten 40 bis 70 Gew.-% Harz, wie Polyesterharz oder Epoxyharz, 2 bis 30 Gew.-% Vernetzer, 0 bis 50 Gew.-% Pigmente und/oder Füllstoffe, 0,02 bis 3 Gew.-% Vernetzungskatalysatoren und ggf. weitere Zusatzstoffe und Additive.

Bezüglich des Einsatzes von Hybridpulverlacken kann eine erfindungsgemäße Zusammensetzung beispielsweise enthalten 25 bis 70 Gew.-% Polyesterharz, 25 bis 50 Gew.-% Epoxidharz, 0 bis 50 Gew.-% Pigmente und/oder Füllstoffe sowie ggf. weitere Zusatzstoffe und Additive.

Die Herstellung der erfindungsgemäßen Pulverlacke kann nach dem bekannten Extrusions/Mahlverfahren erfolgen. Es können aber auch andere Verfahren wie z.B. die Herstellung von Pulvern durch Versprühen aus überkritischen Lösungen oder das "Non-Aqueous Dispersion" Verfahren eingesetzt werden.

Die Applikation des Pulvers auf das zu beschichtende Substrat kann nach den bekannten elektrostatischen Sprühverfahren z.B. mit Hilfe von Corona- oder Tribo-Sprühpistolen oder mit anderen geeigneten Verfahren zur Pulverapplikation erfolgen. Es ist auch möglich, das Pulver in Form einer wäßrigen Dispersion als "Powder Slurry" aufzubringen. Die NIR-Strahlung kann dann vorteilhaft auch zur Entfernung des Wassers eingesetzt werden.

Zur erfindungsgemäßen Aushärtung der Pulverbeschichtung wird die aufgebrachte Pulverlack-Zusammensetzung mit Licht, dessen Maximum der Intensitätsverteilung im nahen Infrarotbereich liegt, im allgemeinen in einem Frequenzbereich von 750 bis 1200 nm (NIR), bestrahlt, wobei das Pulver zunächst aufschmilzt und anschließend in kürzester Zeit aushärtet. Dieser Vorgang kann im allgemeinen in einem Zeitraum von 2 bis 400 Sekunden ablaufen. Als NIR-Quelle können beispielsweise Halogenlampen, insbesondere Hochleistungshalogenlampen, welche beispielswiese Strahler-Temperaturen von 3500 K erreichen können, verwendet werden.

Erfindungsgemäß ist es vorteilhaft, das Aufschmelzen und Aushärten der erfindungsgemäßen Pulverlack-Zusammensetzung in einem Zeitraum von 1 bis 300 Sekunden, bevorzugt 1 bis 30 Sekunden, mit energiereicher NIR-Strahlung vorzunehmen, welche eine Leistung von mehr als 1 Watt/cm², bezogen auf die bestrahlte Fläche, bevorzugt mehr als 10 Watt/cm², aufweist.

Das erfindungsgemäße Verfahren kann diskontinuierlich und kontinuierlich durchgeführt werden. Für eine kontinuierliche Verfahrensweise können die beschichteten Substrate beispielsweise an einer oder mehreren fest installierten NIR-Strahlungsquellen vorbeigeführt werden. Es kann aber auch die NIR-Strahlungsquelle beweglich gestaltet werden.

Die NIR-Bestrahlung kann in Kombination mit konventionellen Wärmequellen wie Infrarotstrahlung oder Konvektionsöfen sowie ggf. mit zusätzlichen Retlektorsystemen und/oder Linsensystemen zur Verstärkung der Strahlung eingesetzt werden.

Das erfindunsgemäße Verfahren eignet sich besonders zur Beschichtung von temperaturempfindlichen Substraten, für die Beschichtung von großen, massiven Bauteilen oder für Beschichtungsaufgaben, für die eine hohe Aushärtungsgeschwindigkeit erforderlich ist. Beispiele für temperaturempfindliche Substrate sind Naturholz- oder Holzwerkstoffoberflächen, Kunststoffoberflächen oder Metallteile, die weitere wärmeempfindliche Komponenten wie z.B. Flüssigkeiten oder Schmierstoffe enthalten. Darüber hinaus sind auch übliche Metallsubstrate sowie Glas und Keramik beschichtbar.

Insbesondere können auch funktlionelle Beschichtungen auf Rohre, Metallteile zur Betonverstärkung oder Konstruktionselemente erfolgen sowie Beschichtungen auf großflächige Bauteile, die nicht in einem Ofen erwärmt werden könen, beispielsweise Stahlkonstruktionen, Brücken, Schiffe.

Das erfindungsgemäße Verfahren läßt sich auch für das Hochgeschwindigkeitsbeschichten mit Pulverlack auf z.B. Metall, Holz, Papier und Folie einsetzen, beispielsweise für das Coil Coating Verfahren mit Beschichtungsgeschwindigkeiten von z.B. >50 m/min.

Das erfindungsgemäße Verfahren ermöglicht das Aufschmelzen und Aushärten von Pulverlacken in einem einzigen Verfahrensschritt bei kurzen Aushärtungszeiten und ermöglicht mit der erfindungsgemäßen Pulverlack-Zusammensetzung eine gleichmäßigere Beschichtung der Substrate während des Aufschmelz- und Aushärtungsprozesses. Darüber hinaus werden durch Verwendung der erfindungsgemäßen Pulverlack-Zusammensetzung die mechanischen Eigenschaften und der Verlauf der Beschichtungen verbessert.

Aufgrund der einfachen Handhabung der NIR-Strahlungsquelle, der kurzen Aushärtungszeiten und der selektiven Erwärmung der Pulverschicht sowie der erzielten qualitativen Vorteile bei der Beschichtung erlaubt das erfindungsgemäße Verfahren den Einsatz von Pulverbeschichtungen in Bereichen wie dem Stahlbau (Brücken, Hochhauskonstruktionen, Schiffsbau, Industrieanlagen etc.), wo bisher der Einsatz von Pulverlackbeschichtungsverfahren aufgrund der Größe der zu beschichtenden Objekte nicht möglich war.

Die Erfindung wird anhand der nachfolgenden Beispiele erläutert:

### Beispiel 1

Ein außenbeständiger, grau-weiß eingefärbter Pulverlack, der 60 Gew.-% eines Polyesters mit einer Säurezahl von 30 mg KOH/g Harz (320 mmol COOH/kg Pulverlack), 5,5 Gew.-% Epoxidhärter PT910 (Ciba Spezialitätenchemie), 4,0 Gw.-% Additive und 30,5 Gew.-% Pigmente und Füllstoffe enthält, wird auf ein Prüfblech mit Hilfe einer Tribo-Pistole aufgesprüht.

Das Blech wird anschließend für 8 Sekunden mit einer NIR-Strahlungsquelle der Firma Industrie SerVis mit einer Leistung von ca. 40 Watt/cm² bestrahlt. Man erhält eine vollständig ausgehärtete, gleichmäßige Pulverbeschichtung von 60 µm Schichtdicke, die einen guten Verlauf, ausgezeichnete mechanische Eigenschaften sowie eine gute Lösungsmittelbeständigkeit aufweist.

### Beispiel 2

Ein blau eingefärbter Epoxy-Polyester (50:50) Hybrid Pulverlack, der 28 Gew.-% eines Polyesters mit einer Säurezahl von 50 mg KOH/g Harz (249 mmol COOH/kg Pulverlack), 28 Gew.-% Epoxid, 4 Gew.-% Additive und 30,5 Gew.-% Pigmente und Füllstoffe enthält, wird auf ein Prüfblech mit Hilfe einer Tribo-Pistole aufgesprüht. Das Blech wird anschließend für 10 Sekunden mit einer NIR-Strahlungsquelle der Firma Industrie SerVis mit einer Leistung von ca. 40 Watt/cm² bestrahlt. Man erhält eine vollständig ausgehärtete, gleichmäßige Pulverbeschichtung von 7 µm Schichtdicke, die einen guten Verlauf, ausgezeichnete mechanische Eigenschaften sowie eine gute Lösungsmittelbeständigkeit aufweist.

### Beispiel 3

Ein weiß eingefärbter Pulverlack, der 52 Gew.-% Epoxidharz, eine Mischung aus 7,9 Gew.-% eines Phenolharzes (299 mmol OH/kg Pulverlack) und 1 Gew.-% Dicyandiamid (357 mmol NH/kg Pulverlack), 3,3 Gew.-% Verlaufsmittel und 35.9 Gew.-% Pigmente und Füllstoffe enthält, wird auf ein Prütblech mit Hilfe einer Tribo-Pistole aufgesprüht.

Das Blech wird anschließend für 15 Sekunden mit einer NIR-Strahlungsquelle der Firma Industrie SerVis mit einer Leistung von ca. 40 Watt/cm² bestrahlt. Man erhält eine vollständig ausgehärtete, gleichmäßige Pulverbeschichtung von 60 µm Schichtdicke, die einen guten Verlauf, ausgezeichnete mechanische Eigenschaften sowie eine gute Lösungsmittelbeständigkeit aufweist.

### Beispiel 4

Ein außenbeständiger, weiß eingefärbter Pulverlack, der 58 Gew.-% eines Polyesters mit einer OH-Zahl von 25 mg KOH/g Harz (258 mmol OH/kg Pulverlack), 8,0 Gew.-% Urethdion-Härter, 4 Gew.-% Additive und 30 Gew.-% Pigmente und Füllstoffe enthält, wird auf ein Prüfbleich mit Hilfe einer Tribo-Pistole aufgesprüht.

Das Blech wird anschließend für 10 Sekunden mit einer NIR-Strahlungsquelle der Firma Industrie SerVis mit einer Leistung von ca. 40 Watt/cm² bestrahlt. Man erhält eine vollständig ausgehärtete, gleichmäßige Pulverbeschichtung von 83 µm Schichtdicke, die einen guten Verlauf, ausgezeichnete mechanische Eigenschaften sowie eine gute Lösungsmittelbeständigkeit aufweist.

### Beispiel 5

Ein außenbeständiger, weiß-grau eingefärbter Pulverlack, der 61 Gew.-% eines Polyesters mit einer Säurezahl von 33 mg KOH/g Harz (358 mmol COOH/kg Pulverlack), 4,5 Gew.-% Epoxid-Härter TGIC (PT 810, Ciba Spezialitätenchemie), 4,0 Gew.-% Additive und 30,5 Gew.-% Pigmente und Füllstoffe enthält, wird mit Hilfe einer Tribo-Pistole auf ein Prüfblech aufgesprüht.

Das Blech wird anschließend für 8 Sekunden mit einer NIR-Strahlungsquelle der Firma Industrie SerVis mit einer Leistung von ca. 40 Watt/cm² bestrahlt. Man erhält eine vollständig ausgehärtete, gleichmäßige Pulverbeschichtung von 60 µm Schichtdicke, die einen guten Verlauf, ausgezeichnete mechanische Eigenschaften sowie eine gute Lösungsmittelbeständigkeit aufweist.

### Vergleichsbeispiel 1

Ein UV-härtbarer Pulverklarlack, der einen ungesättigten Polyester, Urethanacrylat als Co-Bindemittel und einen UV-Initiator enthält, wie z.B. in EP 0 585 742 beschrieben, wird mit einer Tribo-Pistole auf ein Prütblech aufgesprüht.

Nach 60 Sekunden Bestrahlung mit dem NIR-Strahler analog Beispiel 1 erhält man eine nur teilweise verlaufene, ungleichmäßige Beschichtung, die keine guten mechanischen Eigenschaften und keine Lösungsmittelbeständigkeit aufweist.

### Vergleichsbeispiel 2

Ein Pulverklarlack, der epoxy-funktionelles Acrylatharz und mehrfunktionelles aliphatisches Carbonsäureanhydrid als Härterkomponente enthält, wird mit einer Tribo-Pistole auf ein Prüfblech aufgesprüht. Nach 60 Sekunden Bestrahlung mit dem NIR-Strahler analog Beispiel 1 erhält man eine ungleichmäßige Beschichtung, die keine guten mechanischen Eigenschaften und keine Lösungsmittelbeständigkeit aufweist. Auch längere Bestrahlungszeiten ergeben keine befriedigende Beschichtung.

## Patentansprüche

1. Verfahren zur Herstellung von Pulverüberzügen auf metallischen oder nichtmetallischen Oberflächen, **dadurch gekennzeichnet, daß** Pulverlack-Zusammensetzungen verwendet werden, die Harze enthalten, welche über funktionelle Gruppen, die zur Bildung von Wasserstoffbrückenbindungen befähigt sind, vernetzt werden können, wobei die funktionellen Gruppen in einer Konzentration von mehr als 100 mmol/kg Pulverlack-Zusammensetzung enthalten sind, die Pulverlack-Zusammensetzungen auf das Substrat aufgebracht werden und durch NIR-Bestrahlung aufgeschmolzen und ausgehärtet werden.

2. Verfahren gemäß Anspruch 1, **dadurch gekennzeichnet, daß** die Zusammensetzungen Harze mit funktionellen Gruppen OH, COOH, NH₂, NHR und/oder SH enthält.

3. Verfahren gemäß Anspruch 1 und 2, **dadurch gekennzeichnet, daß** die Zusammensetzungen Polyesterharze und/oder (Meth)acrylatharze mit den funktionellen Gruppen OH, COOH, NH₂, NHR und/oder SH enthalten.

4. Verfahren gemäß Anspruch 1 und 2, **dadurch gekennzeichnet, daß** die Zusammensetzungen Vernetzerharze mit den funktionellen Gruppen OH, COOH, NH₂, NHR und/oder SH enthalten.

5. Verfahren gemäß Anspruch 1, 2 und 4, **dadurch gekennzeichnet, daß** 0,02 bis 3 Gew.-% Vernetzungskatalysatoren in der Zusammensetzung enthalten sind.

6. Verfahren gemäß Anspruch 1 bis 3 und 5, **dadurch gekennzeichnet, daß** 20 bis 95 Gew.-% eines Carboxygruppen enthaltenden Polyesters mit einer Säurezahl von 10 bis 200 mg KOH/g Harz enthalten sind.

7. Verfahren gemäß Anspruch 1 bis 3 und 5, **dadurch gekennzeichnet, daß** 15 bis 95 Gew.-% eines Hydroxy-Gruppen enthaltenden Polyesters mit einer OH-Zahl von 10 bis 200 mg KOH/g in der Zusammensetzung enthalten sind.

8. Verfahren gemäß Anspruch 1, 2 und 4, **dadurch gekennzeichnet, daß** 0,5 bis 5 Gew.-% Dicyandiamid in der Zusammensetzung enthalten sind.

9. Verfahren gemäß Anspruch 1, 2 und 4, **dadurch gekennzeichnet, daß** 1 bis 20 Gew.-% eines Phenolharzes mit einem OH-Gruppen-Äquivalentgewicht von 100 bis 200 g/mol in der Zusammensetzung enthalten sind.

10. Verfahren gemäß Anspruch 1, 2 und 4, **dadurch gekennzeichnet, daß** 1 bis 20 % einer di- und/oder polyfunktionellen Carbonsäure mit einem Equivalentgewicht von 45 bis 500 g/mol Carboxylgruppen enthalten sind.

11. Verfahren gemäß Anspruch 1 bis 10, **dadurch gekennzeichnet, daß** das Verfahren kontinuierlich oder diskontinuierlich durchgeführt wird.

12. Verfahren gemäß Anspruch 1 bis 11, **dadurch gekennzeichnet, daß** das Aufschmelzen und Aushärten in einer Zeit von 1 bis 300 Sekunden mit einer Strahlungsleistung von mehr als 1 W/cm² erfolgt.

13. Überzüge, die nach dem Verfahren gemäß Anspruch 1 bis 12 hergestellt sind.

14. Verwendung der Pulverüberzüge gemäß Anspruch 1 bis 13 zur Beschichtung von Holz, Holzwerkstoffen, Kunststoffen, Glas, Keramik sowie Metallen.

15. Verwendung der Pulverüberzüge gemäß Anspruch 14 zur Beschichtung von Substraten, die aus verschiedenen Materialien zusammengesetzt sind und ggf. wärmeempfindliche Komponenten enthalten.

16. Verwendung der Pulverüberzüge gemäß Anspruch 14 und 15 zur Beschichtung von Substraten, die nicht in einem Ofen ausgehärtet werden können, wie Stahlkonstruktionen, Brücken, Schiffe.

17. Verwendung der Pulverüberzpge gemäß Anspruch 14 und 15 für Coil Coating Verfahren mit einer Bandgeschwindigkeit von mehr als 50 m/min.

## Claims

1. Process for producing powder coatings on metallic or non-metallic surfaces, **characterised in that** powder coating compositions are used that contain resins which can be crosslinked by means of functional groups that are capable of forming hydrogen bridge bonds, the functional groups being included in a concentration of over 100 mmol per kg of powder coating composition, the powder coating compositions are applied to the substrate and melted and cured by NIR irradiation.

2. Process according to claim 1, **characterised in that** the compositions contain resins having functional groups OH, COOH, NH₂, NHR and/or SH.

3. Process according to claim 1 and 2, **characterised in that** the compositions contain polyester resins and/or (meth)acrylate resins having the functional groups OH, COOH, NH₂, NHR and/or SH.

4. Process according to claim 1 and 2, **characterised in that** the compositions contain crosslinker resins having the functional groups OH, COOH, NH₂, NHR and/or SH.

5. Process according to claim 1, 2 and 4, **characterised in that** 0.02 to 3 wt.% of crosslinking catalysts are included in the composition.

6. Process according to claim 1 to 3 and 5, **characterised in that** 20 to 95 wt.% of a carboxyl group-containing polyester having an acid value of 10 to 200 mg KOH/g resin are included.

7. Process according to claim 1 to 3 and 5, **characterised in that** 15 to 95 wt.% of a hydroxyl group-containing polyester having an OH value of 10 to 200 mg KOH/g are included in the composition.

8. Process according to claim 1, 2 and 4, **characterised in that** 0.5 to 5 wt.% of dicyandiamide are included in the composition.

9. Process according to claim 1, 2 and 4, **characterised in that** 1 to 20 wt.% of a phenolic resin having an OH group equivalent weight of 100 to 200 g/mol are included in the composition.

10. Process according to claim 1, 2 and 4, **characterised in that** 1 to 20 % of a difunctional and/or polyfunctional carboxylic acid having an equivalent weight of 45 to 500 g/mol carboxyl groups are included.

11. Process according to claim 1 to 10, **characterised in that** the process is performed continuously or batchwise.

12. Process according to claim 1 to 11, **characterised in that** melting and curing take place in a time of 1 to 300 seconds with a radiant power of over 1 W/cm².

13. Coatings produced by the process according to claim 1 to 12.

14. Use of the powder coatings according to claim 1 to 13 for coating wood, wood-based materials, plastics, glass, ceramics and metals.

15. Use of the powder coatings according to claim 14 for coating substrates composed of various materials and optionally containing heat-sensitive components.

16. Use of the powder coatings according to claim 14 and 15 for coating substrates that cannot be cured in an oven, such as steel structures, bridges, ships.

17. Use of the powder coatings according to claim 14 and 15 for coil coating processes at a line speed of over 50 m/min.

## Revendications

1. Procédé pour la réalisation de revêtements en poudre sur des surfaces métalliques ou non métalliques, **caractérisé en ce qu'**on utilise des compositions de peinture en poudre, qui contiennent des résines, qui peuvent être réticulées via des groupes fonctionnels qui sont capables de former des liaisons hydrogène, dans lesquelles les groupes fonctionnels sont contenus en une concentration de plus de 100 mmol/kg de composition de peinture en poudre, on dépose les compositions de peinture en poudre sur le substrat et on les fond et on les durcit par irradiation dans le proche infrarouge.

2. Procédé selon la revendication 1, **caractérisé en ce que** les compositions contiennent des résines avec des groupes fonctionnels OH, COOH, NH₂, NHR et/ou SH.

3. Procédé selon les revendications 1 et 2, **caractérisé en ce que** les compositions contiennent des résines de polyester et/ou des résines de (méth)acrylate avec les groupes fonctionnels OH, COOH, NH₂, NHR et/ou SH.

4. Procédé selon les revendications 1 et 2, **caractérisé en ce que** les compositions sont des résines réticulables avec les groupes fonctionnels OH, COOH, NH₂, NHR et/ou SH.

5. Procédé selon les revendications 1, 2 et 4, **caractérisé en ce que** la composition contient de 0,02 à 3 % en poids de catalyseurs de réticulation.

6. Procédé selon les revendications 1 à 3 et 5, **caractérisé en ce que** la résine contient de 20 à 95 % en poids d'un polyester contenant des groupes carboxy avec un indice d'acide de 10 à 200 mg KOH/g.

7. Procédé selon les revendications 1 à 3 et 5, **caractérisé en ce que** la composition contient de 15 à 95 % en poids d'un polyester contenant des groupes hydroxy avec un indice OH de 10 à 200 mg KOH/g.

8. Procédé selon les revendications 1, 2 et 4, **caractérisé en ce que** la composition contient de 0,5 à 5 % en poids de dicyandiamide.

9. Procédé selon les revendications 1, 2 et 4, **caractérisé en ce que** la composition contient de 1 à 20 % en poids d'une résine phénolique avec une masse équivalente de groupes OH de 100 à 200 g/mol.

10. Procédé selon les revendications 1, 2 et 4, **caractérisé en ce que** la composition contient de 1 à 20 % d'un acide carboxylique di- et/ou polyfonctionnel avec une masse équivalente de 45 à 500 g/mol de groupes carboxyle.

11. Procédé selon les revendications 1 à 10, **caractérisé en ce qu'**on effectue le procédé de manière continue ou discontinue.

12. Procédé selon les revendications 1 à 11, **caractérisé en ce qu'**on effectue la fusion et le durcissement en un temps de 1 à 300 secondes avec une puissance de rayonnement de plus de 1 W/cm².

13. Revêtements qui sont élaborés suivant le procédé selon les revendications 1 à 12.

14. Utilisation des revêtements de poudre selon les revendications 1 à 13 pour le revêtement de bois, de matériaux en bois, de matières plastiques, de verre, de céramique ou de métaux.

15. Utilisation des revêtements en poudre selon la revendication 14 pour le revêtement de substrats, qui sont constitués de différents matériaux et contiennent éventuellement des composants sensibles à la chaleur.

16. Utilisation des revêtements en poudre selon les revendications 14 et 15 pour le revêtement de substrats qui ne peuvent pas être durcis dans un four, comme des constructions en acier, des ponts, des bateaux.

17. Utilisation des revêtements en poudre selon les revendications 14 et 15 pour le procédé de prélaquage en continu (Coil Coating) avec une vitesse de bande de plus de 50 m/min.
